# EUROPEAN PATENT SPECIFICATION

(11) **EP 4 693 171 B1**
(45) Date of publication and mention of the grant of the patent: **18.11.2026**
(21) Application number: 25785581.7
(22) Date of filing: 19.03.2025
(51) Int. Cl.: G06T 7/90, G06T 5/73, G06T 5/94, G06T 7/00, H04N 1/60

(54) **REDNESS DIFFERENTIATION CALIBRATION (RDC) METHOD FOR MEDICAL IMAGE**
VERFAHREN ZUR KALIBRIERUNG DER RÖTUNGSDIFFERENZIERUNG (RDC) FÜR MEDIZINISCHE BILDER
PROCÉDÉ D'ÉTALONNAGE DE DIFFÉRENCIATION DE ROUGEUR (RDC) POUR IMAGE MÉDICALE

(30) Priority: 17.06.2024 CN 202410775242
(43) Date of publication of application: 11.02.2026
(73) Proprietor: Weyo Surgical Technology Ltd., Nanjing, Jiangsu 210028 (CN)
(72) Inventor: REN, Zhiqiang, Nanjing, Jiangsu 210028 (CN); ZOU, Peng, Nanjing, Jiangsu 210028 (CN); LI, Shengbo, Nanjing, Jiangsu 210028 (CN)
(74) Representative: Gille Hrabal Partnerschaftsgesellschaft mbB Patentanwälte
(86) International application number: PCT/CN2025/083298
(87) International publication number: WO 2025/214102

(56) References cited:
- CN-A- 110 047 051
- CN-A- 116 051 420
- CN-A- 116 051 420
- CN-A- 117 218 036
- CN-A- 117 218 036
- CN-A- 117 372 305
- CN-A- 118 333 924
- US-A1- 2023 386 032

## Description

### Field of the Invention

The present invention relates to the technical field of image processing, and in particular to a redness differentiation calibration (R.D.C.) method for medical images.

### Description of Related Art

Modern endoscopes play a crucial role in various scenarios such as gastrointestinal disease diagnosis and laparoscopic surgery. High endoscopic image quality helps improve the level of diagnosis.

Currently, due to unclear spectral discrimination in red wavelength bands regarding the reflectance spectra of mucosa, blood vessels, and tissues, endoscopic imaging systems demonstrate inadequate red color gradation during critical procedures such as examinations and surgery, thereby causing inconvenience for doctors during treatment and judgment.

CN 117372305 A concerns image color enhancement, especially for electronic endoscopy. An RGB image is converted to Lab color space. Enhancement thresholds are determined from the a* component, optionally per sub-image block. The a* values are adjusted using parameters to increase red/white contrast, then interpolated to reduce color banding caused by uneven illumination. The enhanced a* component is recombined with unchanged L* and b* components and converted back to RGB.

### SUMMARY OF THE INVENTION

In order to overcome the above technical problems, an objective of the present invention is to provide a redness differentiation calibration (R.D.C.) method for medical images to improve the red color gradation displayed by the endoscope in critical procedures such as examinations and surgery.

The objective of the present invention may be achieved by the following technical solution.

A redness differentiation calibration (R.D.C.) method for medical images comprises the following steps:
S1: acquiring an original image and converting an RGB color space of the original image to a CIELAB color space to obtain L, a, and b values of the original image;
S2: performing redness intensity estimation on the original image using the a and b values obtained in step S1;
S3: performing edge information extraction on the original image using the L value obtained in step S1;
S4: performing calibration on the original image by calculation using the L value, a redness intensity result and an edge information result obtained in step S1, step S2 and step S3, to obtain a calibration result L_{Q}; and
S5: converting the CIELAB color space of the original image to the RGB color space using the obtained L_{Q}, a, and b values, and outputting a resulting image.

Further, in step S1, the original image to be processed includes at least 8-bit and 10-bit images in terms of color depth.

Further, in step S1, a specific method for calculating the L, a, and b values comprises:
S11: converting an RGB range of the original image to between 0 and 1 to obtain target R, G, and B values; and
S12: converting the obtained target R, G, and B values to X, Y, and Z values using the following formula, and then converting the X, Y, and Z values to three L, a, and b channel component values in the CIELAB color space, wherein the three L, a, and b channel component values range from 0 to 255: $\left[\begin{matrix}X \\ Y \\ Z\end{matrix}\right] = \left[\begin{matrix}0.41 & 0.36 & 0.18 \\ 0.21 & 0.72 & 0.07 \\ 0.02 & 0.12 & 0.95\end{matrix}\right] ⋅ \left[\begin{matrix}R \\ G \\ B\end{matrix}\right]$ (1) ,X, Y, and Z values are obtained; $L * = \left\{\begin{matrix}116 ∗ {Y}^{\frac{1}{3}} - 16 , for Y > 0.008856 \\ 903.3 ∗ Y , for Y \leq 0.008856\end{matrix}\right.$ (2); $L = L * ∗ \frac{255}{100} ;$ (3); $a = 500 \left(f\left(X\right)-f\left(Y\right)\right) + 256 ;$ (4); $b = 200 \left(f\left(Y\right)-f\left(Z\right)\right) + 256 ;$ (5); in Formulas (4) and (5): $f \left(t\right) = \left\{\begin{matrix}{t}^{\frac{1}{3}} , for t > 0.008856 \\ 7.787 t + 16 / 116 , for t \leq 0.008856\end{matrix}\right.$ (6); finally, the three L, a, and b channel component values are obtained.

Further, after the X, Y, and Z values are obtained through Formula (1), the obtained X, Y, Z values are normalized according to X, Y, and Z values specified by a reference white point D65:
X after being normalized is $= \frac{X}{{X}_{n}}$ (7) wherein Xₙ=0.950456;
Y after being normalized is $= \frac{Y}{{Y}_{n}}$ (8) wherein Yₙ=1;
Z after being normalized is $= \frac{Z}{{Z}_{n}}$ (9) wherein Zₙ=0.950456.

Further, in step S2, a specific method for performing redness intensity estimation on the original image comprises:
S21: performing the following calculations using the obtained a and b values: $weight A = \frac{abs \left(a-128\right)}{127}$ (10); $weight B = \frac{127 - abs \left(b-128\right)}{127} ;$ (11); $redness = {\left(weightA∗weightB\right)}^{γ} ;$ (12); wherein abs() represents taking the absolute value, and y is a weight adjustment coefficient; and
S22: normalizing the obtained result to obtain an estimated redness intensity: $weight = \frac{redness}{max \left(redness\right)}$ (13); wherein max() represents taking the maximum value.

Further, in step S3, a specific method for performing edge information extraction on the original image is: $edge = L - {L}_{blur}$ (14); wherein L_{blur} represents a blurred image of an L channel.

Further, the blurred image of the L channel is achieved by using a 9*9 Gaussian filter.

Further, in step S4, a specific method for performing calibration on the original image by calculation comprises:
S41: first, performing transformation on the L channel using a nonlinear mapping function as follows: $f \left(L\right) = \frac{{L}^{f} ∗ {g}^{h}}{{g}^{h} ∗ {L}^{f} + {\left(1-L\right)}^{h} ∗ {e}^{f}}$ (15); wherein e, f, g, and h are adjustment parameters of the nonlinear mapping function to adjust an inflection point and a level of stretch of a mapping curve;
S42: adjusting an intensity of image calibration using the following formula: $DeltaL = \left(f\left(L\right)-L\right) ∗ coeffL + edge ∗ coeffE$ (16); wherein coeffL = 5, coeffE = 4.5; and
S43: obtaining the calibration result L_{Q} using the following formula, wherein L_{Q} ranges from 0 to 25; ${L}_{Q} = L + DeltaL ∗ weight .$ (17).

Further, e=5, f=1.7, g=8, and h=1.4.

Further, in step S5, during the conversion, the X, Y, and Z values to be converted are first obtained through the following formulas: $X = 0.950456 ∗ {x}_{r} ;$ (18); $Y = {y}_{r} ;$ (19); $Z = 1.088754 ∗ {z}_{r} ;$ (20); wherein ${x}_{r} = \left\{\begin{matrix}{f}_{x}^{3} , for {f}_{x} > 0.008856 \\ \left(116{f}_{x}-16\right) / 903.3 , for {f}_{x} \leq 0.008856\end{matrix}\right.$ (21) ${z}_{r} = \left\{\begin{matrix}{f}_{z}^{3} , for {f}_{z} > 0.008856 \\ \left(116{f}_{z}-16\right) / 903.3 , for {f}_{z} \leq 0.008856\end{matrix}\right.$ (22) ${y}_{r} = \left\{\begin{matrix}{\left(\frac{{L}_{Q} + 16}{116}\right)}^{3} & , for {L}_{Q} > 8 \\ \frac{116 {f}_{x} - 16}{903.3} & , for {L}_{Q} \leq 8\end{matrix}\right.$ (23) ${f}_{x} = \frac{a}{500} + {f}_{y} ;$ (24) ${f}_{y} = \frac{{L}_{Q} + 16}{116} ;$ (25) ${f}_{z} = {f}_{y} - \frac{b}{200} ;$ (26) then, the obtained X, Y, and Z values to be converted are filled into the following formula to obtain r, g, and b values: $\left[\begin{matrix}r \\ g \\ b\end{matrix}\right] = {\left[\begin{matrix}0.41 & 0.36 & 0.18 \\ 0.21 & 0.72 & 0.07 \\ 0.02 & 0.12 & 0.95\end{matrix}\right]}^{- 1} ⋅ \left[\begin{matrix}X \\ Y \\ Z\end{matrix}\right]$ (27) and finally, the r, g, and b values are restored to the R, G, and B range of the original image and the resulting image is output.

The present invention has the following advantageous effects:
Compared with conventional methods, according to the present technical solution, an RGB color space of an original image is converted to a CIELAB color space to obtain L, a, and b values of the original image; then, redness intensity estimation and edge information extraction are performed on the original image in turn, and calibration is performed on the original image by calculation to obtain a calibration result L_{Q}; and finally, the CIELAB color space of the original image is converted to the RGB color space, and a resulting image is output. Results show that according to this method, the contrasts and edges of red regions are calibrated by estimating the redness intensity of each pixel in the original image, so that the color differentiation and clarity of key parts are improved, and the display of blood vessels and structures of the surface mucosa is strengthened. Therefore, the method is of great significance in the discovery and diagnosis of tiny lesions, targeted biopsy, localization of lesion boundaries, and tissue localization during surgery, etc.

### Brief Description of the Drawings

The present invention is further described below with reference to the accompanying drawings.
FIG. 1 is a schematic diagram of a processing flow of a redness differentiation calibration (R.D.C.) method for medical images according to the present invention;
FIG. 2 is an example of an image from an original endoscope;
FIG. 3 is an output image obtained after the image in FIG. 2 is subjected to redness intensity estimation;
FIG. 4 is an output image obtained after the image in FIG. 3 is subjected to edge information extraction;
FIG. 5 is an output image obtained after the image in FIG. 4 is calibrated by calculation; and
FIG. 6 is an output image obtained after the image in FIG. 5 is subjected to LAB color space conversion.

### DETAILED DESCRIPTION OF THE INVENTION

The technical solutions in the embodiments of the present invention are clearly and fully described below in conjunction with the embodiments of the present invention. Apparently, the embodiments described are merely some, rather than all embodiments of the present invention. The scope of the present invention and its embodiments is defined by the appended claims.

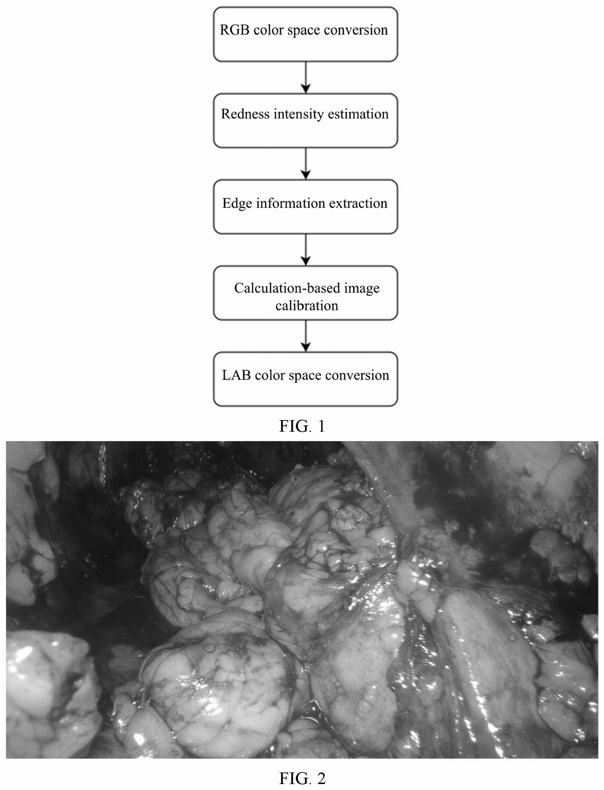

As shown in FIGS. 1, 2, 3, 4, 5, and 6, a redness differentiation calibration (R.D.C.) method for medical images includes the following steps:
S1: An original image is acquired, and an RGB color space of the original image is converted to a CIELAB color space to obtain L, a, and b values of the original image, where CIELAB is a device-independent color space that includes three channels: brightness L, a range a from red to green, and a range b from yellow to blue, so that it can better describe the perceptual properties of color; and by converting the RGB color space to the CIELAB color space, the color information of the image can be more accurately represented and processed, which is beneficial for color-related image processing tasks such as color correction, color matching, image segmentation.

The original image being processed by the method includes at least 8-bit and 10-bit images in terms of color depth.
S11: When the original image being processed is an 8-bit image, an RGB range of the original image needs to be converted to between 0 and 1. This can be achieved by dividing R, G, and B values to be input in the original image by 255. Finally, target R, G, and B values will be obtained; and
S12: the obtained target R, G, and B values is converted to X, Y, and Z values using the following formula, and then the X, Y, and Z values are converted to three L, a, and b channel component values in the CIELAB color space, where the three L, a, and b channel component values range from 0 to 255: $\left[\begin{matrix}X \\ Y \\ Z\end{matrix}\right] = \left[\begin{matrix}0.41 & 0.36 & 0.18 \\ 0.21 & 0.72 & 0.07 \\ 0.02 & 0.12 & 0.95\end{matrix}\right] ⋅ \left[\begin{matrix}R \\ G \\ B\end{matrix}\right]$ (1)
after the X, Y, and Z values are obtained through Formula (1), the obtained X, Y, Z values are normalized according to X, Y, and Z values specified by a reference white point D65:
   X after being normalized is $= \frac{X}{{X}_{n}}$ (7) wherein Xₙ=0.950456;
   Y after being normalized is $= \frac{Y}{{Y}_{n}}$ (8) wherein Yₙ=1; and
   Z after being normalized is $= \frac{Z}{{Z}_{n}}$ (9) wherein Zₙ=0.950456.

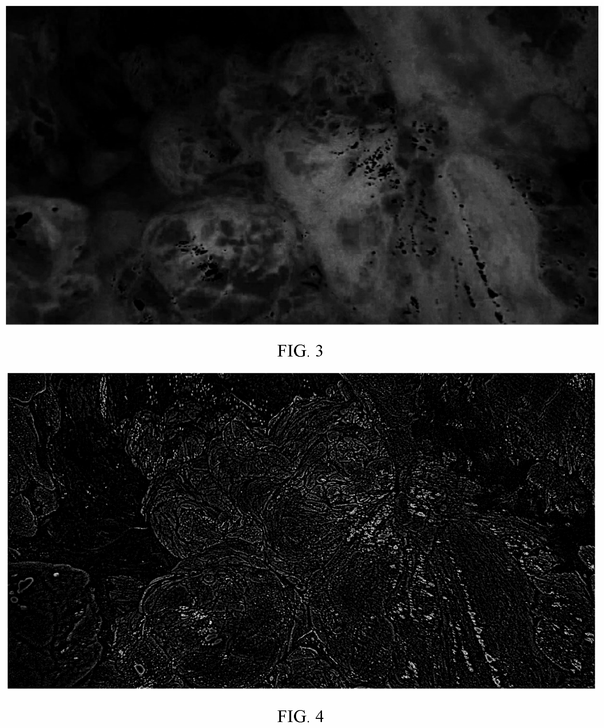

The normalized X, Y, and Z values are obtained according to Formulas (7), (8) and (9), and three L, a, and b channel component values can be obtained using the following formulas: $L * = \left\{\begin{matrix}116 ∗ {Y}^{\frac{1}{3}} - 16 , for Y > 0.008856 \\ 903.3 ∗ Y , for Y \leq 0.008856\end{matrix}\right.$ (2); $L = L * ∗ \frac{255}{100} ;$ (3); $a = 500 \left(f\left(X\right)-f\left(Y\right)\right) + 256 ;$ (4); $b = 200 \left(f\left(Y\right)-f\left(Z\right)\right) + 256 ;$ (5); in Formulas (4) and (5): $f \left(t\right) = \left\{\begin{matrix}{t}^{\frac{1}{3}} , for t > 0.008856 \\ 7.787 t + 16 / 116 , for t \leq 0.008856\end{matrix}\right.$ (6); and
finally, the three L, a, and b channel component values are obtained;
S2: As shown in FIGS. 2 and 3, redness intensity estimation is performed on the original image using the a and b values obtained in step S1. A specific method includes:
S21: the following calculations are performed using the obtained a and b values: $weight A = \frac{abs \left(a-128\right)}{127}$ (10); $weight B = \frac{127 - abs \left(b-128\right)}{127} ;$ (11); $redness = {\left(weightA∗weightB\right)}^{γ}$ (12); where abs() represents taking the absolute value, γ is a weight adjustment coefficient, and in the present embodiment, γ is 2; and
S22: the obtained result is normalized to obtain an estimated redness intensity: $weight = \frac{redness}{max \left(redness\right)} ;$ (13); where max() represents taking the maximum value.
S3: As shown in FIG. 2 and FIG. 4, edge information extraction is performed on the original image using the L value obtained in step S1.

A common edge information extraction method is to subtract a blurred image from an original grayscale image to obtain a high-frequency component in the grayscale image. However, in this method, it is to subtract a blurred image of the L channel from the obtained L channel component value, that is: $edge = L - {L}_{blur}$ (14); where L_{blur} represents the blurred image of the L channel. A blurring method of the blurred image of the L channel is not limited. In the present embodiment, the blurred image of the L channel is achieved by using a 9*9 Gaussian filter.

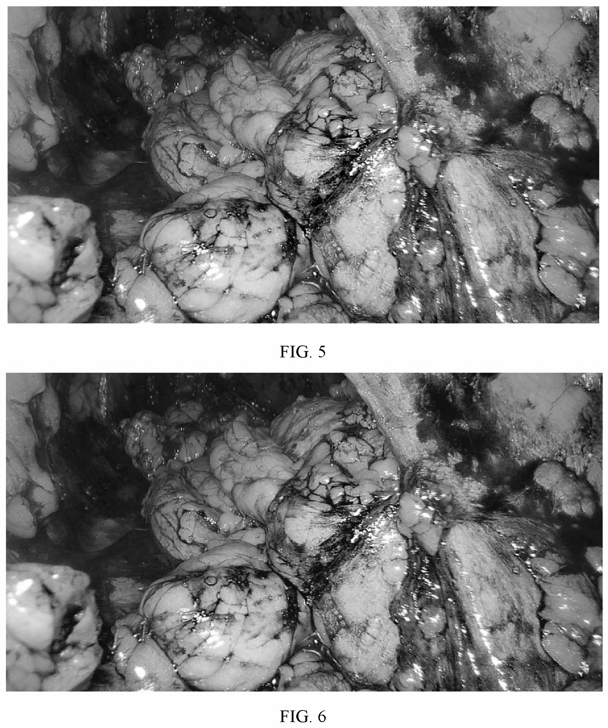

S4: As shown in FIGS. 2, 3, 4, and 5, calibration is performed on the original image by calculation using the L value, a redness intensity result and an edge information result obtained in step S1, step S2 and step S3, to obtain a calibration result L_{Q}. Through the calibration, the quality of the image can be improved, the specific features of the image can be calibrated, or the visualization effect of the image can be improved, thereby making the image clearer, easier to analyze, and more contrastive.A specific method of calculation includes:
S41: first, the L channel is transformed using a nonlinear mapping function as follows: $f \left(L\right) = \frac{{L}^{f} ∗ {g}^{h}}{{g}^{h} ∗ {L}^{f} + {\left(1-L\right)}^{h} ∗ {e}^{f}}$ (15); where e, f, g, and h are adjustment parameters of the nonlinear mapping function, which can adjust an inflection point and a level of stretch of a mapping curve. In the present embodiment, e=5, f=1.7, g=8, and h=1.4;
S42: an intensity of image calibration is adjusted using the following formula: $DeltaL = \left(f\left(L\right)-L\right) ∗ coeffL + edge ∗ coeffE$ (16); where coeffL = 5, coeffE = 4.5; and
S43: the calibration result L_{Q} is obtained using the following formula, wherein L_{Q} ranges from 0 to 25; ${L}_{Q} = L + DeltaL ∗ weight \left(17\right) ;$ (17);
S5: As shown in FIG. 6, the CIELAB color space of the original image is converted to the RGB color space using the obtained L_{Q}, a, and b values, and a resulting image is output:
   during the conversion, the X, Y, and Z values to be converted are first obtained through the following formulas: $X = 0.950456 ∗ {x}_{r} ;$ (18); $Y = {y}_{r} ;$ (19); $Z = 1.088754 ∗ {z}_{r} ;$ (20); wherein ${x}_{r} = \left\{\begin{matrix}{f}_{x}^{3} , for {f}_{x} > 0.008856 \\ \left(116{f}_{x}-16\right) / 903.3 , for {f}_{x} \leq 0.008856\end{matrix}\right.$ (21) ${z}_{r} = \left\{\begin{matrix}{f}_{z}^{3} , for {f}_{z} > 0.008856 \\ \left(116{f}_{z}-16\right) / 903.3 , for {f}_{z} \leq 0.008856\end{matrix}\right.$ (22) ${y}_{r} = \left\{\begin{matrix}{\left(\frac{{L}_{Q} + 16}{116}\right)}^{3} & , for {L}_{Q} > 8 \\ \frac{116 {f}_{x} - 16}{903.3} & , for {L}_{Q} \leq 8\end{matrix}\right.$ (23) ${f}_{x} = \frac{a}{500} + {f}_{y} ;$ (24) ${f}_{y} = \frac{{L}_{Q} + 16}{116} ;$ (25) ${f}_{z} = {f}_{y} - \frac{b}{200} ;$ (26)
   then, the obtained X, Y, and Z values to be converted are filled into the following formula to obtain r, g, and b values: $\left[\begin{matrix}r \\ g \\ b\end{matrix}\right] = {\left[\begin{matrix}0.41 & 0.36 & 0.18 \\ 0.21 & 0.72 & 0.07 \\ 0.02 & 0.12 & 0.95\end{matrix}\right]}^{- 1} ⋅ \left[\begin{matrix}X \\ Y \\ Z\end{matrix}\right]$ (27);
   and finally, the r, g, and b values are restored to the R, G, and B range of the original image and the resulting image is output.

According to the solution, an RGB color space of an original image is converted to a CIELAB color space to obtain L, a, and b values of the original image; then, redness intensity estimation and edge information extraction are performed on the original image in turn, and calibration is performed on the original image by calculation to obtain a calibration result L_{Q}; and finally, the CIELAB color space of the original image is converted to the RGB color space, and a resulting image is output. Results show that the method can effectively estimate the redness intensity, calibrate mucosal structures and tissue features, and highlight microvessels in the superficial mucosa and submucosa of endoscopic images, while introducing minimal alterations to non-red regions, thus making processed images more suitable for doctors to make observation and make diagnoses.

In the description of the specification, reference to terms such as "one embodiment", "example", "specific example" means that the specific features, structures, materials or characteristics described in conjunction with the embodiments or examples are included in at least one embodiment or example of the present invention. In this specification, schematic expressions of the above terms do not necessarily refer to the same embodiment or example.

The above contents are merely examples and explanations of the present invention. Those skilled in the art can make various modifications, additions or similar substitutions to the described specific embodiments, which shall all fall within the scope of protection of the present invention as long as they do not erexceed the scope defined by the claims.

## Claims

1. A redness differentiation calibration, R.D.C., method for medical images, the method comprising the following steps:
S1: acquiring an original image and converting an RGB color space of the original image to a CIELAB color space to obtain L, a, and b values of the original image;
in step S1, a specific method for calculating the L, a, and b values comprises:
S11: converting an RGB range of the original image to between 0 and 1 to obtain target R, G, and B values; and
S12: converting the obtained target R, G, and B values to X, Y, and Z values using the following formula, and then converting the X, Y, and Z values to three L, a, and b channel component values in the CIELAB color space, wherein the three L, a, and b channel component values range from 0 to 255: $\left[\begin{matrix}X \\ Y \\ Z\end{matrix}\right] = \left[\begin{matrix}0.41 & 0.36 & 0.18 \\ 0.21 & 0.72 & 0.07 \\ 0.02 & 0.12 & 0.95\end{matrix}\right] ⋅ \left[\begin{matrix}R \\ G \\ B\end{matrix}\right]$ (1) the X, Y, and Z values are obtained; $L * = \left\{\begin{matrix}116 ∗ {Y}^{\frac{1}{3}} - 16 , for Y > 0.008856 \\ 903.3 ∗ Y , for Y \leq 0.008856\end{matrix}\right.$ (2) $L = L * ∗ \frac{255}{100}$ (3) $a = 500 \left(f\left(X\right)-f\left(Y\right)\right) + 256$ (4) $b = 200 \left(f\left(Y\right)-f\left(Z\right)\right) + 256$ (5) in Formulas (4) and (5): $f \left(t\right) = \left\{\begin{matrix}{t}^{\frac{1}{3}} , for t > 0.008856 \\ 7.787 t + 16 / 116 , for t \leq 0.008856\end{matrix}\right.$ (6)
finally, the three L, a, and b channel component values are obtained;
after the X, Y, and Z values are obtained through Formula (1), the obtained X, Y, Z values are normalized according to X, Y, and Z values specified by a reference white point D65:
X after being normalized is $= \frac{X}{{X}_{n}}$ (7) wherein Xₙ=0.950456;
Y after being normalized is $= \frac{Y}{{Y}_{n}}$ (8) wherein Yₙ=1; and
Z after being normalized is $= \frac{Z}{{Z}_{n}}$ (9) wherein Zₙ=0.950456;
S2: performing redness intensity estimation on the original image using the a and b values obtained in step S1;
in step S2, a specific method for performing redness intensity estimation on the original image comprises:
S21: performing the following calculations using the obtained a and b values: $weight A = \frac{abs \left(a-128\right)}{127}$ (10); $weight B = \frac{127 - abs \left(b-128\right)}{127} ;$ (11); $redness = {\left(weightA∗weightB\right)}^{γ} ;$ (12);
wherein abs() represents taking the absolute value, and y is a weight adjustment coefficient; and
S22: normalizing the obtained result to obtain an estimated redness intensity: $weight = \frac{redness}{max \left(redness\right)} ;$ (13);
wherein max() represents taking the maximum value;
S3: performing edge information extraction on the original image using the L value obtained in step S1;
in step S3, a specific method for performing edge information extraction on the original image is: $edge = L - {L}_{blur}$ (14);
wherein L_{blur} represents a blurred image of an L channel;
S4: performing calibration on the original image by calculation using the L value, a redness intensity result and an edge information result obtained in step S1, step S2 and step S3, to obtain a calibration result L_{Q};
in step S4, a specific method for performing calibration on the original image by calculation comprises:
S41: first, performing transformation on the L channel using a nonlinear mapping function as follows: $f \left(L\right) = \frac{{L}^{f} ∗ {g}^{h}}{{g}^{h} ∗ {L}^{f} + {\left(1-L\right)}^{h} ∗ {e}^{f}}$ (15);
wherein e, f, g, and h are adjustment parameters of the nonlinear mapping function to adjust an inflection point and a level of stretch of a mapping curve;
S42: adjusting an intensity of image calibration using the following formula: $DeltaL = \left(f\left(L\right)-L\right) ∗ coeffL + edge ∗ coeffE$ (16);
wherein coeffL = 5, coeffE = 4.5; and
S43: obtaining the calibration result L_{Q} using the following formula, wherein L_{Q} ranges from 0 to 25; ${L}_{Q} = L + DeltaL ∗ weight$ (17); and
S5: converting the CIELAB color space of the original image to the RGB color space using the obtained L_{Q}, a, and b values, and outputting a resulting image.

2. The redness differentiation calibration, R.D.C., method for medical images according to claim 1, wherein in step S1, the original image to be processed includes at least 8-bit and 10-bit images in terms of color depth.

3. The redness differentiation calibration, R.D.C., method for medical images according to claim 1, wherein the blurred image of the L channel is achieved by using a 9*9 Gaussian filter.

4. The redness differentiation calibration, R.D.C., method for medical images according to claim 1, wherein e=5, f=1.7, g=8, and h=1.4.

5. The redness differentiation calibration, R.D.C., method for medical images according to claim 4, wherein, in step S5, during the conversion, the X, Y, and Z values to be converted are first obtained through the following formulas: $X = 0.950456 ∗ {x}_{r}$ (18) $Y = {y}_{r}$ (19) $Z = 1.088754 ∗ {z}_{r}$ (20) wherein ${x}_{r} = \left\{\begin{matrix}{f}_{x}^{3} , for {f}_{x} > 0.008856 \\ \left(116{f}_{x}-16\right) / 903.3 , for {f}_{x} \leq 0.008856\end{matrix}\right.$ (21) ${z}_{r} = \left\{\begin{matrix}{f}_{z}^{3} , for {f}_{z} > 0.008856 \\ \left(116{f}_{z}-16\right) / 903.3 , for {f}_{z} \leq 0.008856\end{matrix}\right.$ (22) ${y}_{r} = \left\{\begin{matrix}{\left(\frac{{L}_{Q} + 16}{116}\right)}^{3} , for {L}_{Q} > 8 \\ \frac{116 {f}_{x} - 16}{903.3} , for {L}_{Q} \leq 8\end{matrix}\right.$ (23) ${f}_{x} = \frac{a}{500} + {f}_{y} ;$ (24); ${f}_{y} = \frac{{L}_{Q} + 16}{116} ;$ (25); ${f}_{z} = {f}_{y} - \frac{b}{200} ;$ (26); then, the obtained X, Y, and Z values to be converted are filled into the following formula to obtain r, g, and b values: $\left[\begin{matrix}r \\ g \\ b\end{matrix}\right] = {\left[\begin{matrix}0.41 & 0.36 & 0.18 \\ 0.21 & 0.72 & 0.07 \\ 0.02 & 0.12 & 0.95\end{matrix}\right]}^{- 1} ⋅ \left[\begin{matrix}X \\ Y \\ Z\end{matrix}\right]$ (27); and finally, the r, g, and b values are restored to the R, G, and B range of the original image, and the resulting image is output.

## Patentansprüche

1. Verfahren zur Rötungsdifferenzierungskalibrierung, R.D.C., für medizinische Bilder, wobei das Verfahren die folgenden Schritte umfasst:
S1: Erfassen eines Originalbildes und Umwandeln eines RGB-Farbraums des Originalbildes in einen CIELAB-Farbraum, um L-, a- und b-Werte des Originalbildes zu erhalten;
wobei in Schritt S1 ein spezielles Verfahren zum Berechnen der L-, a- und b-Werte umfasst:
S11: Umwandeln eines RGB-Bereichs des Originalbildes in einen Bereich zwischen 0 und 1, um Ziel-R-, -G- und -B-Werte zu erhalten; und
S12: Umwandeln der erhaltenen Ziel-R-, -G- und -B-Werte in X-, Y- und Z-Werte unter Verwendung der folgenden Formel und anschließendes Umwandeln der X-, Y- und Z-Werte in drei Kanalkomponentenwerte L, a und b im CIELAB-Farbraum, wobei die drei Kanalkomponentenwerte L, a und b im Bereich von 0 bis 255 liegen: $\left[\begin{matrix}X \\ Y \\ Z\end{matrix}\right] = \left[\begin{matrix}0.41 & 0.36 & 0.18 \\ 0.21 & 0.72 & 0.07 \\ 0.02 & 0.12 & 0.95\end{matrix}\right] ⋅ \left[\begin{matrix}R \\ G \\ B\end{matrix}\right]$ (1) wodurch die Werte X, Y und Z erhalten werden; $L * = \left\{\begin{matrix}116 ∗ {Y}^{\frac{1}{3}} - 16 , für Y > 0.008856 \\ 903.3 ∗ Y , für Y \leq 0.008856\end{matrix}\right.$ (2) $L = L * ∗ \frac{255}{100}$ (3) $a = 500 \left(f\left(X\right)-f\left(Y\right)\right) + 256$ (4) $b = 200 \left(f\left(Y\right)-f\left(Z\right)\right) + 256$ (5) wobei in den Formeln (4) und (5): $f \left(t\right) = \left\{\begin{matrix}{t}^{\frac{1}{3}} , für t > 0.008856 \\ 7.787 t + 16 / 116 , für t \leq 0.008856\end{matrix}\right.$ (6)
schließlich werden die drei Kanalkomponentenwerte L, a und b erhalten;
nachdem die X-, Y-, Z-Werte durch Formel (1) erhalten wurden, werden die erhaltenen X-, Y-, Z-Werte gemäß den durch einen Referenzweißpunkt D65 festgelegten X-, Y- und Z-Werten normiert:
X nach der Normierung ist $= \frac{X}{{X}_{n}}$ (7) wobei Xₙ=0,950456;
Y nach der Normierung ist $= \frac{Y}{{Y}_{n}}$ (8) wobei Yₙ=1; und
Z nach der Normierung ist $= \frac{Z}{{Z}_{n}}$ (9)
Zₙ, wobei =0,950456;
S2: Durchführen einer Rötungsintensitätsschätzung an dem Originalbild unter Verwendung der in Schritt S1 erhaltenen a- und b-Werte;
wobei in Schritt S2 ein spezielles Verfahren zum Durchführen der Rötungsintensitätsschätzung an dem Originalbild umfasst:
S21: Durchführen der folgenden Berechnungen unter Verwendung der erhaltenen a- und b-Werte: $weight A = \frac{abs \left(a-128\right)}{127}$ (10); $weight B = \frac{127 - abs \left(b-128\right)}{127}$ (11); $redness = {\left(weightA∗weightB\right)}^{γ} ;$ (12);
wobei abs() das Bilden des Absolutwerts darstellt und γ ein Gewichtungsanpassungskoeffizient ist; und
S22: Normieren des erhaltenen Ergebnisses, um eine geschätzte Rötungsintensität zu erhalten: $weight = \frac{redness}{max \left(redness\right)}$ (13);
wobei max() das Bilden des Maximalwerts darstellt;
S3: Durchführen einer Kanteninformationsextraktion an dem Originalbild unter Verwendung des in Schritt S1 erhaltenen L-Werts;
wobei in Schritt S3 ein spezielles Verfahren zum Durchführen der Kanteninformationsextraktion an dem Originalbild lautet: $edge = L - {L}_{blur}$ (14);
wobei L_{blur} ein unscharfes Bild eines L-Kanals darstellt;
S4: Durchführen einer Kalibrierung an dem Originalbild durch Berechnung unter Verwendung des L-Werts, eines Rötungsintensitätsergebnisses und eines Kanteninformationsergebnisses, die in Schritt S1, Schritt S2 und Schritt S3 erhalten
wurden, um ein Kalibrierungsergebnis L_{Q} zu erhalten;
wobei in Schritt S4 ein spezielles Verfahren zum Durchführen der Kalibrierung an dem Originalbild durch Berechnung umfasst:
S41: zunächst Durchführen einer Transformation an dem L-Kanal unter Verwendung einer nichtlinearen Abbildungsfunktion wie folgt: $f \left(L\right) = \frac{{L}^{f} ∗ {g}^{h}}{{g}^{h} ∗ {L}^{f} + {\left(1-L\right)}^{h} ∗ {e}^{f}}$ (15); wobei e, f, g und h Anpassungsparameter der nichtlinearen Abbildungsfunktion sind, um einen Wendepunkt und ein Maß der Streckung einer Abbildungskurve anzupassen;
S42: Anpassen einer Intensität der Bildkalibrierung unter Verwendung der folgenden Formel: $DeltaL = \left(f\left(L\right)-L\right) ∗ coeffL + edge ∗ coeffE ;$ (16); wobei coeffL = 5, coeffE = 4.5; und
S43: Erhalten des Kalibrierungsergebnisses L_{Q} unter Verwendung der folgenden Formel, wobei L_{Q} im Bereich von 0 bis 25 liegt; ${L}_{Q} = L + DeltaL ∗ weight$ (17) und
S5: Umwandeln des CIELAB-Farbraums des Originalbildes in den RGB-Farbraum unter Verwendung der erhaltenen Werte L_{Q}, a und b und Ausgeben eines resultierenden Bildes.

2. Verfahren zur Rötungsdifferenzierungskalibrierung, R.D.C., für medizinische Bilder nach Anspruch 1, wobei in Schritt S1 das zu verarbeitende Originalbild hinsichtlich der Farbtiefe mindestens 8-Bit- und 10-Bit-Bilder umfasst.

3. Verfahren zur Rötungsdifferenzierungskalibrierung, R.D.C., für medizinische Bilder nach Anspruch 1, wobei das unscharfe Bild des L-Kanals durch Verwendung eines 9*9-Gauß-Filters erzielt wird.

4. Verfahren zur Rötungsdifferenzierungskalibrierung, R.D.C., für medizinische Bilder nach Anspruch 1, wobei e=5, f=1,7, g=8 und h=1,4.

5. Verfahren zur Rötungsdifferenzierungskalibrierung, R.D.C., für medizinische Bilder nach Anspruch 4, wobei in Schritt S5 während der Umwandlung die umzuwandelnden X-, Y- und Z-Werte zunächst durch die folgenden Formeln erhalten werden: $X = 0.950456 ∗ {x}_{r}$ (10) $Y = {y}_{r}$ (19) $Z = 1.088754 ∗ {z}_{r}$ (20) wobei ${x}_{r} = \left\{\begin{matrix}{f}_{x}^{3} , für {f}_{x} > 0.008856 \\ \left(116{f}_{x}-16\right) / 903.3 , für {f}_{x} \leq 0.008856\end{matrix}\right.$ (21) ${z}_{r} = \left\{\begin{matrix}{f}_{z}^{3} , für {f}_{z} > 0.008856 \\ \left(116{f}_{z}-16\right) / 903.3 , für {f}_{z} \leq 0.008856\end{matrix}\right.$ (22) ${y}_{r} = \left\{\begin{matrix}{\left(\frac{{L}_{Q} + 16}{116}\right)}^{3} , für {L}_{Q} > 8 \\ \frac{116 {f}_{x} - 16}{903.3} , für {L}_{Q} \leq 8\end{matrix}\right.$ (23) ${f}_{x} = \frac{a}{500} + {f}_{y}$ (24) ${f}_{y} = \frac{{L}_{Q} + 16}{116} ;$ (25) ${f}_{z} = {f}_{y} - \frac{b}{200}$ (26) anschließend werden die erhaltenen umzuwandelnden X-, Y- und Z-Werte in die folgende Formel eingesetzt, um r-, g- und b-Werte zu erhalten: $\left[\begin{matrix}r \\ g \\ b\end{matrix}\right] = {\left[\begin{matrix}0.41 & 0.36 & 0.18 \\ 0.21 & 0.72 & 0.07 \\ 0.02 & 0.12 & 0.95\end{matrix}\right]}^{- 1} ⋅ \left[\begin{matrix}X \\ Y \\ Z\end{matrix}\right]$ (27) und schließlich werden die r-, g- und b-Werte auf den R-, G- und B-Bereich des Originalbildes zurückgeführt und das resultierende Bild wird ausgegeben.

## Revendications

1. Procédé d'étalonnage de la différenciation des rougeurs, R.D.C., pour des images médicales, le procédé charactérisé en ce qu'il compred les étapes suivantes:
S1: l'acquisition d'une image originale et conversion de l'espace colorimétrique RVB de l'image originale en un espace colorimétrique CIELAB afin d'obtenir les valeurs L, a et b de l'image originale;
à l'étape S1, une méthode spécifique de calcul des valeurs L, a et b comprend:
S11: convertir une plage RVB de l'image originale dans un intervalle compris entre 0 et 1 afin d'obtenir des valeurs cibles R, G et B; et
S12: convertir les valeurs cibles R, G et B obtenues en valeurs X, Y et Z à l'aide de la formule suivante, puis convertir les valeurs X, Y et Z en trois valeurs de composantes de canaux L, a et b dans l'espace colorimétrique CIELAB, les trois valeurs de composantes de canaux L, a et b étant comprises entre 0 et 255: $\left[\begin{matrix}X \\ Y \\ Z\end{matrix}\right] = \left[\begin{matrix}0.41 & 0.36 & 0.18 \\ 0.21 & 0.72 & 0.07 \\ 0.02 & 0.12 & 0.95\end{matrix}\right] ⋅ \left[\begin{matrix}R \\ G \\ B\end{matrix}\right]$ (1) les valeurs d'X , Y etZ sont obtenues; $L * = \left\{\begin{matrix}116 ∗ {Y}^{\frac{1}{3}} - 16 , pour Y > 0.008856 \\ 903.3 ∗ Y , pour Y \leq 0.008856\end{matrix}\right.$ (2) $L = L * ∗ \frac{255}{100}$ (3) $a = 500 \left(f\left(X\right)-f\left(Y\right)\right) + 256$ (4) $b = 200 \left(f\left(Y\right)-f\left(Z\right)\right) + 256$ (5) dans les formules (4) et (5): $f \left(t\right) = \left\{\begin{matrix}{t}^{\frac{1}{3}} , pour t > 0.008856 \\ 7.787 t + 16 / 116 , pour t \leq 0.008856\end{matrix}\right.$ (6) enfin, on obtient les trois valeurs des composantes des canaux L, a et b;
une fois les valeurs d'X , Y et Z obtenues à l'aide de la formule (1), les valeurs X, Y et Z obtenues sont normalisées par rapport aux valeurs X, Y et Z spécifiées par un point blanc de référence D65:
X, après normalisation, est égal à $= \frac{X}{{X}_{n}}$ (7) où Xₙ = 0,950456;
Y, après normalisation, est égal à $= \frac{Y}{{Y}_{n}}$ (8) où Yₙ = 1; et
Z, après normalisation, est égal à $= \frac{Z}{{Z}_{n}}$ (9) où Zₙ = 0,950456;
S2: estimation de l'intensité de la rougeur sur l'image d'origine à l'aide des valeurs a et b obtenues à l'étape S1;
à l'étape S2, une méthode spécifique pour effectuer l'estimation de l'intensité de la rougeur sur l'image d'origine comprend:
S21: effectuer les calculs suivants à l'aide des valeurs a et b obtenues: $weight A = \frac{abs \left(a-128\right)}{127}$ (10); $weight B = \frac{127 - abs \left(b-128\right)}{127} ;$ (11); $redness = {\left(weightA∗weightB\right)}^{γ} ;$ (12); où abs() représente prende la valeur absolue, et y est un coefficient d'ajustement de pondération; et
S22: normaliser le résultat obtenu pour obtenir une intensité estimée de la rougeur: $weight = \frac{redness}{max \left(redness\right)} ;$ (13); où max() désigne prendre la valeur maximale;
S3: extraction des informations de contour sur l'image d'origine à l'aide de la valeur L obtenue à l'étape S1;
à l'étape S3, une méthode spécifique pour effectuer l'extraction des informations de contours sur l'image d'origine est la suivante: $edge = L - {L}_{blur}$ (14); où L_{blur} représente une image floue d'un canal L;
S4: effectuer un étalonnage de l'image d'origine par calcul à l'aide de la valeur L, d'un résultat d'intensité de rougeur et d'un résultat d'informations de contours obtenus aux étapes S1, S2 et S3, afin d'obtenir un résultat d'étalonnage L_{Q};
à l'étape S4, un procédé spécifique permettant d'effectuer un étalonnage de l'image d'origine par calcul comprend:
S41: tout d'abord, effectuer une transformation sur le canal L à l'aide d'une fonction de mappage non linéaire comme suit: $f \left(L\right) = \frac{{L}^{f} ∗ {g}^{h}}{{g}^{h} ∗ {L}^{f} + {\left(1-L\right)}^{h} ∗ {e}^{f}}$ (15); où e, f, g et h sont des paramètres d'ajustement de la fonction de mappage non linéaire permettant d'ajuster un point d'inflexion et un niveau d'étirement d'une courbe de mappage;
S42: ajuster l'intensité de l'étalonnage de l'image à l'aide de la formule suivante: $DeltaL = \left(f\left(L\right)-L\right) ∗ coeffL + edge ∗ coeffE$ (16); où coeff L = 5, coeffE = 4.5; et
S43: obtenir le résultat de l'étalonnage L_{Q} à l'aide de la formule suivante, dans laquelle L_{Q} varie de 0 à 25; ${L}_{Q} = L + DeltaL ∗ weight$ (17) et
S5: convertir l'espace colorimétrique CIELAB de l'image d'origine en espace colorimétrique RVB à l'aide des valeurs obtenuesL_{Q}, a et b, et sortie d'une image résultante.

2. Procédé d'étalonnage de la différenciation de la rougeur, R.D.C., pour images médicales selon la revendication 1, dans lequel, à l'étape S1, l'image d'origine à traiter comprend au moins des images de 8 bits et de 10 bits en termes de profondeur de couleur.

3. Procédé de calibrage de la différenciation des rouges, R.D.C., pour images médicales selon la revendication 1, dans lequel l'image floutée du canal L est obtenue à l'aide d'un filtre gaussien 9×9.

4. Procédé de calibrage de la différenciation des rougeurs, R.D.C., pour images médicales selon la revendication 1, dans lequel e = 5, f = 1,7, g = 8 et h = 1,4.

5. Procédé d'étalonnage de la différenciation des rouges, R.D.C., pour images médicales selon la revendication 4, dans lequel, à l'étape S5, pendant la conversion, les valeurs X, Y et Z à convertir sont d'abord obtenues à l'aide des formules suivantes: $X = 0.950456 ∗ {x}_{r}$ (18) $Y = {y}_{r}$ (19) $Z = 1.088754 ∗ {z}_{r}$ (20) où ${x}_{r} = \left\{\begin{matrix}{f}_{x}^{3} , pour {f}_{x} > 0.008856 \\ \left(116{f}_{x}-16\right) / 903.3 , pour {f}_{x} \leq 0.008856\end{matrix}\right.$ (21) ${z}_{r} = \left\{\begin{matrix}{f}_{z}^{3} , pour {f}_{z} > 0.008856 \\ \left(116{f}_{z}-16\right) / 903.3 , pour {f}_{z} \leq 0.008856\end{matrix}\right.$ (22) ${y}_{r} = \left\{\begin{matrix}{\left(\frac{{L}_{Q} + 16}{116}\right)}^{3} , pour {L}_{Q} > 8 \\ \frac{116 {f}_{x} - 16}{903.3} , pour {L}_{Q} \leq 8\end{matrix}\right.$ (23) ${f}_{x} = \frac{a}{500} + {f}_{y}$ (24) ${f}_{y} = \frac{{L}_{Q} + 16}{116}$ (25) ${f}_{z} = {f}_{y} - \frac{b}{200}$ (26) ensuite, les valeurs X, Y et Z obtenues à convertir sont substituées dans la formule suivante pour obtenir les valeurs r, g et b: $\left[\begin{matrix}r \\ g \\ b\end{matrix}\right] = {\left[\begin{matrix}0.41 & 0.36 & 0.18 \\ 0.21 & 0.72 & 0.07 \\ 0.02 & 0.12 & 0.95\end{matrix}\right]}^{- 1} ⋅ \left[\begin{matrix}X \\ Y \\ Z\end{matrix}\right]$ (27); et enfin, les valeurs r, g et b sont rétablies dans les plages R, G et B de l'image d'origine, et l'image résultante est générée.
